# EUROPÄISCHE PATENTANMELDUNG

(11) **EP 4 552 870 A1**
(43) Veröffentlichungstag der Anmeldung: **14.05.2025**
(21) Anmeldenummer: 23209133.0
(22) Anmeldetag: 10.11.2023
(51) Int. Cl.: B60G 21/05

(54) **VERBUNDLENKERACHSE FÜR EIN KRAFTFAHRZEUG**

(71) Anmelder: Benteler Automobiltechnik GmbH, 33102 Paderborn (DE)
(72) Erfinder: MIELKE, Oliver, 33184 Altenbeken (DE); RUDI, Vitalis, 33104 Paderborn (DE); SCHULTZ, Erik, 33102 Paderborn (DE); HANZLIK, Vaclav, 46014 Liberec (CZ)
(74) Vertreter: Ksoll, Peter

(57) **Zusammenfassung**

Die Erfindung betrifft eine Verbundlenkerachse (1) für ein Kraftfahrzeug, aufweisend zwei Längslenker (2), welche durch ein Torsionsprofil (3) verbunden sind, wobei das Torsionsprofil (3) an seinen längsseitigen Endabschnitten (4) mit den Längslenkern (2) mittels einer Schweißnaht (5) stoffschlüssig gefügt ist, **dadurch gekennzeichnet**, dass das Torsionsprofil (3) in seinen jeweiligen längsseitigen Endabschnitten (4) im Bereich der Schweißnaht (5) eine Entlastungssicke (6) aufweist, wobei die Entlastungssicke (6) eine Längserstreckung (LR) aufweist und in Richtung ihrer Längserstreckung (LR) quer zum Verlauf der Schweißnaht (5) orientiert ist.

## Beschreibung

Die vorliegende Erfindung betrifft eine Verbundlenkerachse für ein Kraftfahrzeug gemäß den Merkmalen im Oberbegriff des Anspruchs 1.

Verbundlenkerachsen für Kraftfahrzeuge, welche die Räder mit der Karosserie verbinden, sind im Stand der Technik bekannt und werden zumeist als Hinterachse eingesetzt. Die Verbundlenkerachsen umfassen zumeist zwei biege- und verdrehsteife Längslenker und ein Torsionsprofil, welches die beiden Längslenker verbindet. An entsprechende Torsionsprofile werden besondere Anforderungen gestellt. Ihre Endabschnitte sollen möglichst steif ausgestaltet sein, um unerwünschte Spur- und Sturzänderungen zu vermeiden. Gleichzeitig sollen sie aber auch torsionsweich weich sein, was zumeist durch einen torsionsweichen Mittelabschnitt des Torsionsprofils erzielt wird.

In der Regel wird das Torsionsprofil an seinen jeweiligen längsseitigen Endabschnitt mittels einer Schweißnaht stoffschlüssig mit dem Längslenker gefügt. Im Übergangsbereich zwischen den Längslenkern und dem Torsionsprofil und insbesondere an und in den Schweißnähten kommt es während des Betriebs des Kraftfahrzeugs mitunter zu hohen Spannungsspitzen. Diese werden beispielsweise durch die von den Rädern auf die Verbundlenkerachse übertragenen Vertikalkräfte ausgelöst und beeinträchtigen die Lebensdauer der Schweißnähte und somit der Verbundlenkerachse selbst.

Um die Haltbarkeit der Verbundlenkerachse zu erhöhen, gibt es im Stand der Technik zwei bekannte Möglichkeiten, welche die im Anbindungsbereich zwischen den Längslenkern und dem Torsionsprofil auftretenden Spannungen reduzieren. Zum einen kann die Dicke bzw. die Materialstärke der längsseitigen Endabschnitte des Torsionsprofils sowie der angrenzenden Längslenker erhöht werden, beispielsweise durch zusätzliche Verstärkungsbleche. Dies ist jedoch mit hohen Kosten verbunden und erhöht zusätzlich das Gewicht der Verbundlenkerachse, was nachteilig für das Fahrverhalten als auch den Kraftstoffverbrauch des Kraftfahrzeugs ist. Zum anderen kann die Schweißnaht mittels eines Kugelstrahlverfahrens bearbeitet werden, was die Herstellkosten der Verbundlenkerachse jedoch ebenfalls deutlich erhöht.

Ausgehend vom Stand der Technik ist es die Aufgabe der vorliegenden Erfindung, eine Verbundlenkerachse mit möglichst geringem Gewicht bereitzustellen, bei der die auf die Schweißnähte wirkenden Spannungen im Anbindungsbereich zwischen Längslenker und Torsionsprofil während des Betriebs des als Einsatzbereich vorgesehenen Kraftfahrzeugs reduziert sind.

Diese Aufgabe wird gelöst durch eine Verbundlenkerachse mit den Merkmalen von Anspruch 1.

Vorteilhafte Ausgestaltungsvarianten sind Gegenstand der abhängigen Ansprüche.

Die erfindungsgemäße Verbundlenkerachse für ein Kraftfahrzeug weist zwei Längslenker auf, welche durch ein Torsionsprofil verbunden sind. Bei dem vorgesehenen Einsatz der Verbundlenkerachse in einem Kraftfahrzeug sind die zwei Längslenker der Verbundlenkerachse in Fahrzeuglängsrichtung orientiert, während das Torsionsprofil die beiden Längslenker in Fahrzeugquerrichtung miteinander verbindet. Die Verbundlenkerachse verbindet die Räder mit der Karosserie des Kraftfahrzeugs. Das Torsionsprofil ist an seinen längsseitigen Endabschnitten mit den Längslenkern mittels einer Schweißnaht stoffschlüssig gefügt. Die Schweißnaht folgt dabei insbesondere der Geometrie der zu verbindenden Bauteile.

Erfindungswesentlich ist es, dass das Torsionsprofil in seinen jeweiligen längsseitigen Endabschnitten im Bereich der Schweißnaht mindestens eine Entlastungssicke aufweist. Die Entlastungssicke weist eine Längserstreckung auf und ist in Richtung ihrer Längserstreckung quer zum Verlauf der Schweißnaht orientiert. Durch die von den Rädern auf die Verbundlenkerachse übertragenen Vertikalkräfte wird das Torsionsprofil mit einem Biegemoment beaufschlagt, was zu Spannungen im Übergangsbereich zwischen den Längslenkern und dem Torsionsprofil und insbesondere an und in den diese verbindenden Schweißnähten führt. Dies kann sich nachteilig auf die Lebensdauer der Schweißnähte und somit der Verbbundlenkerachse auswirken. Mittels der erfindungsgemäß angeordneten Entlastungssicken werden die auf die Schweißnähte wirkenden Spannungen reduziert, indem diese von den Entlastungssicken aufgenommen werden. So kann die Lebensdauer der Schweißnähte und damit der Verbundlenkerachse erhöht werden. Die Ausrichtung der Entlastungssicke quer zum Verlauf der Schweißnaht hat sich als besonders vorteilhaft für die Aufnahme der auftretenden Spannungen herausgestellt.

Durch die erfindungsgemäße Anordnung der Entlastungssicken wird das Gewicht der Verbundlenkerachse nicht erhöht und die Ausbildung der Entlastungssicken im Torsionsprofil ist kostengünstig.

In einer bevorzugten Ausführungsvariante der Erfindung weist die Entlastungssicke an ihrer zur Schweißnaht orientierten Seite eine Breite auf, die im Wesentlichen der Länge eines Schweißnahtabschnittes entspricht, in welchem bei einer Beaufschlagung des Torsionsprofils mit einem Biegemoment die höchsten Spannungen auftreten. Im Rahmen der Erfindung hat sich herausgestellt, dass durch die Ausbildung einer entsprechenden Breite insbesondere die hohen Spannungsspitzen effektiv von der Entlastungssicke aufgenommen werden. Die auf die Schweißnaht wirkende Spannung wird reduziert, so dass die Lebensdauer der Verbundlenkerachse erhöht wird. Die Länge des Schweißnahtabschnitts bezieht sich dabei auf die Länge der Schweißnaht in diesem Abschnitt.

Ein Fachmann im Bereich der Kraftfahrzeugtechnik ist in der Lage, den Schweißnahtabschnitt, in welchem bei einer Beaufschlagung des Torsionsprofils mit einem Biegemoment die höchsten Spannungen auftreten, anhand des Schweißnahtverlaufs zwischen dem Längslenker und dem Torsionsprofil zu erkennen. Insbesondere entspricht dieser Schweißnahtabschnitt dem Übergangsbereich der Schweißnaht von einem, bezogen auf den Längslenker im Wesentlichen vertikalen Verlauf zu einem im Wesentlichen horizontalen Verlauf.

Bevorzugt verjüngt sich die Entlastungssicke bezogen auf ihre Breite längsseitig in entgegengesetzter Richtung zu der jeweiligen Schweißnaht. Eine entsprechende Verjüngung der Entlastungssicke sorgt dafür, dass die im Anbindungsbereich zwischen Längslenker und Torsionsprofil entstehenden Spannungen gezielt in einen Mittelabschnitt des Torsionsprofils abgeleitet werden können.

Vorzugsweise geht die Entlastungssicke in entgegengesetzter Richtung zur Schweißnaht kontinuierlich in die Formgebung des Torsionsprofils über. Dies hat zwei Vorteile. Zum einen kann die Entlastungssicke ohne Einbringung eines Hinterschnitts im Torsionsprofil ausgebildet werden. Dies ist vorteilhaft für den Fertigungsprozess der Verbundlenkerachse. Zum anderen hat sich im Rahmen der Erfindung gezeigt, dass ein entsprechend kontinuierlicher Übergang in die Formgebung des Torsionsprofils dafür sorgt, dass die von der Entlastungssicke aufgenommenen Spannungen in den Mittelabschnitt des Torsionsprofils weitergeleitet werden. Insbesondere geht die Entlastungssicke in eine Außenfläche des Torsionsprofils über.

In einer weiteren vorteilhaften Ausführungsvariante der Erfindung ist die Entlastungssicke in einem Randbereich des Torsionsprofils angeordnet. Dies bedeutet, dass die Entlastungssicke seitlich versetzt zur Mittellängsachse des Torsionsprofils angeordnet ist. Da die höchsten Spannungen insbesondere in den Randbereichen des Übergangsbereichs zwischen Längslenker und Torsionsprofil auftreten, können durch die im Randbereich angeordneten Entlastungssicken die Spannungsspitzen effektiv aufgenommen werden.

Vorteilhaft ist, wenn die zur Schweißnaht orientierte Seite der Entlastungssicke gegenüberliegend zu dem Schweißnahtabschnitt angeordnet ist, in welchem bei einer Beaufschlagung des Torsionsprofils mit einem Biegemoment die höchsten Spannungen auftreten.

Insbesondere ist die Entlastungssicke in Richtung ihrer Längserstreckung senkrecht zum Verlauf des gegenüberliegenden Schweißnahtabschnittes orientiert.

Die Entlastungssicke weist insbesondere eine Tiefe auf, die 25 bis 200 % der lokalen Wandstärke des Torsionsprofils entspricht, bevorzugt 30 bis 60 %, besonders bevorzugt 40 bis 60 %. Die Tiefe bezieht sich dabei auf die Maximale Tiefe der Entlastungssicke, welche bevorzugt im zur Schweißnaht orientierten Bereich der Entlastungssicke angeordnet ist.

Vorzugsweise weist das Torsionsprofil in seinen längsseitigen Endabschnitten im Bereich der Schweißnaht jeweils zwei Entlastungssicken auf. In dieser Ausführungsvarianten werden die im Übergangsbereich zwischen den Längslenkern und dem Torsionsprofil auftretenden Spannungen weiter reduziert. Die Entlastungssicken sind insbesondere an den jeweiligen Randbereichen des Torsionsprofils angeordnet.

Das Torsionsprofil weist vorzugsweise im Querschnitt einen doppelwandigen U-förmigen Mittelabschnitt auf, welcher sich zu den längsseitigen Endabschnitten hin zu einem ovalförmigen Profil aufweitet. Dies ermöglicht eine umlaufende schweißtechnische Verbindung des Torsionsprofils mit dem jeweiligen Längslenker.

Weitere Vorteile, Merkmale, Eigenschaften und Aspekte der vorliegenden Erfindung sind Gegenstand der nachfolgenden Beschreibung. Bevorzugte Ausgestaltungsvarianten werden in schematischen Figuren dargestellt. Diese dienen dem einfachen Verständnis der Erfindung. Es zeigen:
- Figur 1: eine erfindungsgemäße Verbundlenkerachse in einer Vorderansicht,
- Figur 2: die erfindungsgemäße Verbundlenkerachse unter Beaufschlagung einer Vertikalkraft in einer Vorderansicht und
- Figur 3: eine Detailansicht der erfindungsgemäßen Verbundlenkerachse in einer Perspektive.

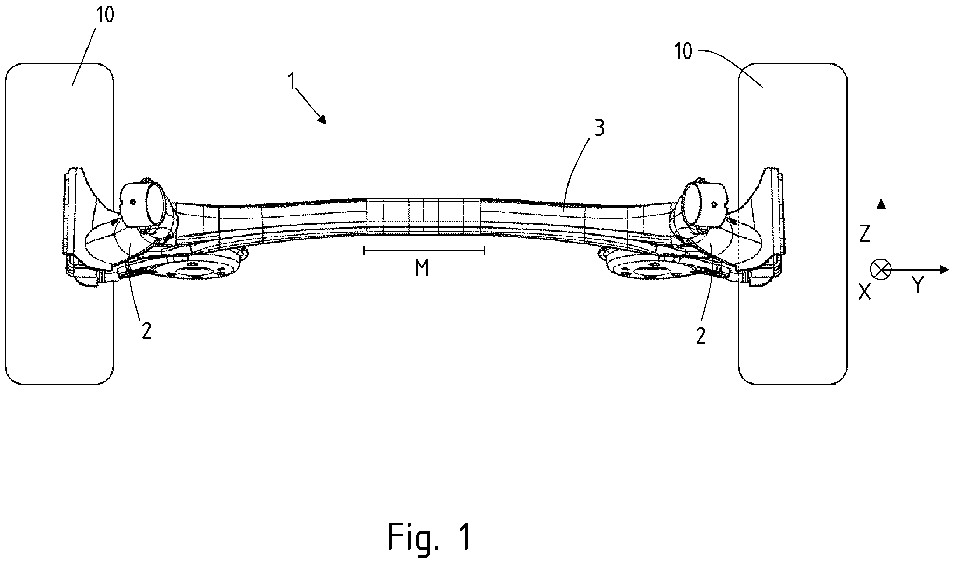

Figur 1 zeigt eine erfindungsgemäße Verbundlenkerachse 1, welche zwei Längslenker 2 aufweist, die durch ein Torsionsprofil 3 verbunden sind. Die Verbundlenkerachse 1 verbindet in einem Kraftfahrzeug die hinteren Räder 10 mit einer nicht näher dargestellten Karosserie. Die zwei Längslenker 2 sind in Fahrzeuglängsrichtung X orientiert, während das Torsionsprofil 3 die beiden Längslenker 2 in Fahrzeugquerrichtung Y miteinander verbindet. Das Torsionsprofil 3 weist einen torsionsweichen Mittelabschnitt M auf.

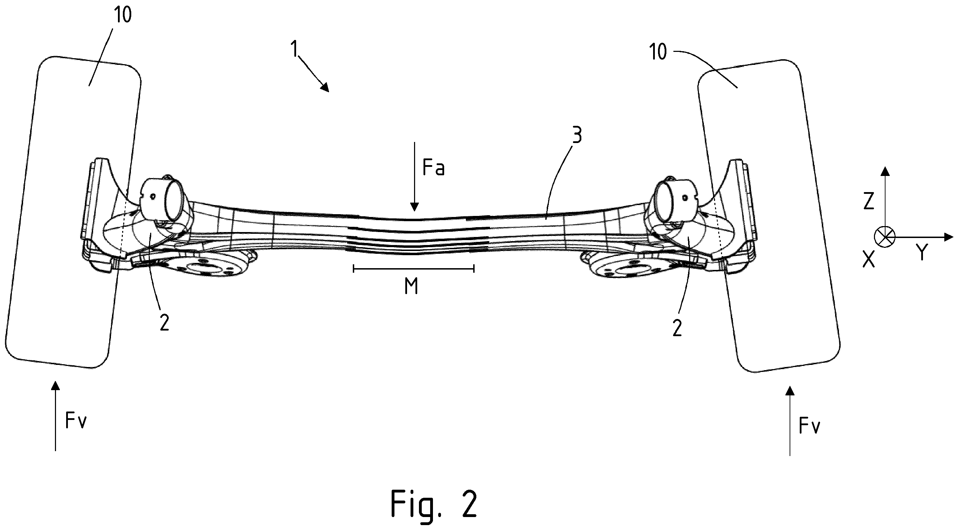

In Figur 2 ist die Verbundlenkerachse 1 in einem Zustand dargestellt, in welchem auf die Räder 10 des Kraftfahrzeugs jeweils ein Vertikalstoß wirkt, welcher in Vertikalrichtung Z eine Vertikalkraft Fv auf das jeweilige Rad 10 überträgt. Aufgrund der Kopplung der Räder 10 mit der Verbundlenkerachse 1, werden die Räder 10 in Richtung der Verbundlenkerachse 1 geneigt. Aufgrund des resultierenden Biegemoments wird der Mittelabschnitt M des Torsionsprofils 3 verformt. Dies zeigt der Vergleich zwischen Figur 1 und 2. Der Verbundlenker 1 ist im Übergangsbereich zwischen den starren Längslenkern 2 und dem Torsionsprofil 3 einer hohen Belastung in Form von lokalen Spannungen ausgesetzt.

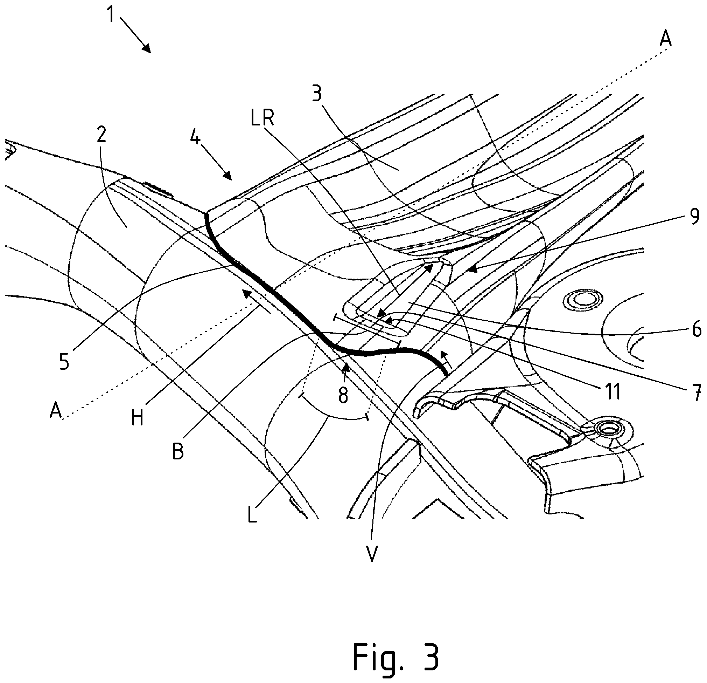

Figur 3 zeigt eine Detailansicht des Übergangsbereichs zwischen dem Torsionsprofil 3 und einem der Längslenker 2 der Verbundlenkerachse 1. Das Torsionsprofil 3 ist an seinen längsseitigen Endabschnitten 4 mit den Längslenkern 2 mittels einer Schweißnaht 5 stoffschlüssig gefügt. Die Schweißnaht 5 folgt dabei der Geometrie der zu verbindenden Bauteile. Die zuvor genannten Spannungen im Übergangsbereich wirken daher insbesondere an und in der Schweißnaht 5.

Das Torsionsprofil 3 weist in seinen jeweiligen längsseitigen Endabschnitten 4 im Bereich der Schweißnaht 5 eine Entlastungssicke 6 auf. Durch die erfindungsgemäße Anordnung der Entlastungssicke 6 werden die auf die Schweißnaht 5 wirkenden Spannungen von der Entlastungssicke 6 aufgenommen. Die Belastung der Schweißnaht 5 wird entsprechend reduziert, was zu einer höheren Lebensdauer der Verbundlenkerachse 1 führt. Die Entlastungssicken 6 erhöhen das Gewicht der Verbundlenkerachse 1 nicht und sind zudem kostengünstig herstellbar.

Der Mittelabschnitt M des Torsionsprofils 3 ist im Querschnitt doppelwandig und U-förmig ausgebildet. In Richtung der längsseitigen Endabschnitte 4 weitet sich der Querschnitt des Torsionsprofils 4 zu einem kreisförmigen Profil auf. Dies ermöglicht eine umlaufende schweißtechnische Verbindung des Torsionsprofils 3 mit dem jeweiligen Längslenker 2.

Erfindungsgemäß weist die Entlastungssicke 6 eine Längserstreckung LR auf und ist in Richtung ihrer Längserstreckung LR quer zum Verlauf der angrenzenden Schweißnaht 5 orientiert. Diese Anordnung der Entlastungssicke 6 hat sich im Rahmen der Erfindung als besonders vorteilhaft für die Aufnahme der auf die Schweißnähte 5 wirkenden Spannungen herausgestellt. Zudem können durch die quer zum Verlauf der Schweißnaht 5 orientierte Ausrichtung die Spannungen über die Entlastungssicke 6 in den Mittelabschnitt M des Torsionsprofils 3 abgeleitet werden.

Die Entlastungssicke 6 weist an ihrer zur Schweißnaht 5 orientierten Seite 7 eine Breite B auf, die im Wesentlichen der Länge L eines Schweißnahtabschnittes 8 entspricht, in welchem bei der Beaufschlagung des Torsionsprofils 3 mit einem Biegemoment die höchsten Spannungen auftreten. Hier hat sich im Rahmen der Erfindung gezeigt, dass durch eine Anpassung der Breite B an die Länge L des Schweißnahtabschnittes 8 im Anbindungsbereich zwischen Längslenker 2 und Torsionsprofil 3 auftretende Spannungen effektiv auf die Entlastungssicke 6 übertragen werden, so dass die ansonsten auf die Schweißnaht 5 wirkenden Spannungsspitzen vermieden werden.

Ein zuständiger Fachmann ist in der Lage, anhand des Schweißnahtverlaufs zwischen Torsionsprofil 3 und Längslenker 2 zu identifizieren, bei welchen Schweißnahtabschnitten 8 im Falle der Beaufschlagung des Torsionsprofils 3 mit einem Biegemoment die höchsten Spannungen auftreten. Im vorliegenden Ausführungsbeispiel entspricht der Schweißnahtabschnitt 8 dem Übergangsbereich der Schweißnaht 5 von einem, bezogen auf den Längslenker 2 im Wesentlichen vertikalen Verlauf V zu einem im Wesentlichen horizontalen Verlauf H. Wie in Figur 3 zu sehen ist, ist das Torsionsprofil 3 an seinen längsseitigen Endabschnitten 4 vollumfänglich mit dem Längslenker 2 verschweißt. Bezogen auf die Einbaurichtung der Verbundlenkerachse 1 im Kraftfahrzeug, geht die Schweißnaht 5 somit von einem im Wesentlichen vertikalen Verlauf V in einen im Wesentlichen horizontalen Verlauf H über.

Bezogen auf ihre Breite B verjüngt sich die Entlastungssicke 6 längsseitig in entgegengesetzter Richtung zur Schweißnaht 5. Durch eine entsprechende Ausgestaltung der Entlastungssicke 6 werden die durch diese aufgenommenen Spannungen in Richtung des Mittelabschnitts M des Torsionsprofils 3 weitergeleitet.

Die Entlastungssicke 6 geht in entgegengesetzter Richtung zur Schweißnaht 5 kontinuierlich in die Formgebung des Torsionsprofils 3 über. Dies hat zum einen den Vorteil, dass kein Hinterschnitt für die Ausbildung der Entlastungssicke 6 benötigt wird, was vorteilhaft für den Herstellungsprozess des Torsionsprofils 3 ist. Zum anderen sorgt der kontinuierliche Übergang der Entlastungssicke 6 in die Formgebung des Torsionsprofils 3 dafür, dass die von der Entlastungssicke 6 aufgenommenen Spannungen an den Mittelabschnitt M des Torsionsprofils 3 weitergeleitet werden.

Die Entlastungssicke 6 weist eine Tiefe auf, die 25 bis 200 % der lokalen Wandstärke des Torsionsprofils 3 entspricht. Die Tiefe bezieht sich insbesondere auf die maximale Tiefe der Entlastungssicke 6, die im zur Schweißnaht 5 orientierten Bereich 11 der Entlastungssicke 6 angeordnet ist.

Die Entlastungssicke 6 ist in einem Randbereich 9 des Torsionsprofils 3 angeordnet. Das bedeutet, dass die Entlastungssicke 6 seitlich versetzt zur Mittellängsachse A des Torsionsprofils 3 angeordnet ist. Da insbesondere im Randbereich des Übergangsbereichs zwischen den Längslenkern 2 und dem Torsionsprofil 3 bei einer Biegebelastung des Torsionsprofils 3 entsprechende Spannungsspitzen auftreten, können durch eine Anordnung der Entlastungssicken 6 im Randbereich 9 des Torsionsprofils 3 die Spannungen vorteilhaft aufgenommen werden.

Die zur Schweißnaht 5 orientierte Seite 7 der Entlastungssicke ist gegenüberliegend zum Schweißnahtabschnitt 8 angeordnet. Dies Anordnung hat sich als besonders vorteilhaft für die Aufnahme entsprechender Spannungen herausgestellt.

Das Torsionsprofil 3 kann in seinen längsseitigen Endabschnitten 4 im Bereich der Schweißnaht 5 auch jeweils zwei Entlastungssicken 6 aufweisen. Dies ist in den Figuren nicht dargestellt. Durch die Ausbildung von jeweils zwei Entlastungssicken 6, können die auftretenden Spannung im Übergangsbereich zwischen den Längslenkern 2 und dem Torsionsprofil 3 besonders vorteilhaft aufgenommen werden.

### Bezugszeichen:

- 1 -: Verbundlenkerachse
- 2 -: Längslenker
- 3 -: Torsionsprofil
- 4 -: längsseitiger Endabschnitt
- 5 -: Schweißnaht
- 6 -: Entlastungssicke
- 7 -: Seite von 6
- 8 -: Schweißnahtabschnitt
- 9 -: Randbereich
- 10 -: Rad
- 11 -: zur Schweißnaht orientierter Bereich

- A -: Mittellängsachse
- B -: Breite
- Fv -: Kraft
- H -: horizontaler Verlauf
- L -: Länge
- LR -: Längserstreckung
- M -: Mittelabschnitt
- V -: vertikaler Verlauf

## Patentansprüche

1. Verbundlenkerachse (1) für ein Kraftfahrzeug, aufweisend zwei Längslenker (2), welche durch ein Torsionsprofil (3) verbunden sind, wobei das Torsionsprofil (3) an seinen längsseitigen Endabschnitten (4) mit den Längslenkern (2) mittels einer Schweißnaht (5) stoffschlüssig gefügt ist, **dadurch gekennzeichnet, dass** jeder Endabschnitt (4) im Bereich der Schweißnaht (5) eine Entlastungssicke (6) aufweist, wobei die Entlastungssicke (6) eine Längserstreckung (LR) aufweist und in Richtung ihrer Längserstreckung (LR) quer zum Verlauf der Schweißnaht (5) orientiert ist.

2. Verbundlenkerachse (1) nach Anspruch 1, **dadurch gekennzeichnet, dass** die Entlastungssicke (6) an ihrer zur Schweißnaht (5) orientierten Seite () eine Breite (B) aufweist, die im Wesentlichen der Länge (L) eines Schweißnahtabschnittes (8) entspricht, in welchem bei einer Beaufschlagung des Torsionsprofils (3) mit einem Biegemoment die höchsten Spannungen auftreten.

3. Verbundlenkerachse (1) nach Anspruch 1 oder 2, **dadurch gekennzeichnet, dass** sich die Entlastungssicke (6) bezogen auf ihre Breite (B) längsseitig in entgegengesetzter Richtung zur jeweiligen Schweißnaht (5) verjüngt.

4. Verbundlenkerachse (1) nach einem der vorstehenden Ansprüche, **dadurch gekennzeichnet, dass** die Entlastungssicke (6) in entgegengesetzter Richtung zur Schweißnaht (5) kontinuierlich in die Formgebung des Torsionsprofils (3) übergeht.

5. Verbundlenkerachse (1) nach einem der vorstehenden Ansprüche, **dadurch gekennzeichnet, dass** die Entlastungssicke (6) in einem Randbereich (9) des Torsionsprofils (3) angeordnet ist.

6. Verbundlenkerachse (1) nach einem der vorstehenden Ansprüche, **dadurch gekennzeichnet, dass** die zur Schweißnaht (5) orientierte Seite () der Entlastungssicke (6) gegenüberliegend zu dem Schweißnahtabschnitt (8) angeordnet ist, in welchem bei einer Beaufschlagung des Torsionsprofils (3) mit einem Biegemoment die höchsten Spannungen auftreten.

7. Verbundlenkerachse (1) nach einem der vorstehenden Ansprüche, **dadurch gekennzeichnet, dass** der Schweißnahtabschnitt (8), in welchem bei einer Beaufschlagung des Torsionsprofils (3) mit einem Biegemoment die höchsten Spannungen auftreten, dem Übergangsbereich der Schweißnaht (5) von einem bezogen auf den Längslenker (2) im Wesentlichen vertikalen (V) Verlauf zu einem im Wesentlichen horizontalen (H) Verlauf entspricht.

8. Verbundlenkerachse (1) nach einem der vorstehenden Ansprüche, **dadurch gekennzeichnet, dass** das Torsionsprofil (3) in seinen längsseitigen Endabschnitten (4) im Bereich der Schweißnaht (5) jeweils zwei Entlastungssicken (6) aufweist.

## Geänderte Patentansprüche

### Geänderte Patentansprüche gemäss Regel 137(2) EPÜ.

1. Verbundlenkerachse (1) für ein Kraftfahrzeug, aufweisend zwei Längslenker (2), welche durch ein Torsionsprofil (3) verbunden sind, wobei das Torsionsprofil (3) an seinen längsseitigen Endabschnitten (4) mit den Längslenkern (2) mittels einer Schweißnaht (5) stoffschlüssig gefügt ist, wobei jeder Endabschnitt (4) im Bereich der Schweißnaht (5) eine Entlastungssicke (6) aufweist, wobei die Entlastungssicke (6) eine Längserstreckung (LR) aufweist und in Richtung ihrer Längserstreckung (LR) quer zum Verlauf der Schweißnaht (5) orientiert ist, **dadurch gekennzeichnet, dass** die Entlastungssicke (6) an ihrer zur Schweißnaht (5) orientierten Seite (7) eine Breite (B) aufweist, die im Wesentlichen der Länge (L) eines Schweißnahtabschnittes (8) entspricht, in welchem bei einer Beaufschlagung des Torsionsprofils (3) mit einem Biegemoment die höchsten Spannungen auftreten, wobei der Schweißnahtabschnitt (8), in welchem bei einer Beaufschlagung des Torsionsprofils (3) mit einem Biegemoment die höchsten Spannungen auftreten, dem Übergangsbereich der Schweißnaht (5) von einem bezogen auf den Längslenker (2) im Wesentlichen vertikalen (V) Verlauf zu einem im Wesentlichen horizontalen (H) Verlauf entspricht.

2. Verbundlenkerachse (1) nach Anspruch 1, **dadurch gekennzeichnet, dass** sich die Entlastungssicke (6) bezogen auf ihre Breite (B) längsseitig in entgegengesetzter Richtung zur jeweiligen Schweißnaht (5) verjüngt.

3. Verbundlenkerachse (1) nach einem der vorstehenden Ansprüche, **dadurch gekennzeichnet, dass** die Entlastungssicke (6) in entgegengesetzter Richtung zur Schweißnaht (5) kontinuierlich in die Formgebung des Torsionsprofils (3) übergeht.

4. Verbundlenkerachse (1) nach einem der vorstehenden Ansprüche, **dadurch gekennzeichnet, dass** die Entlastungssicke (6) in einem Randbereich (9) des Torsionsprofils (3) angeordnet ist.

5. Verbundlenkerachse (1) nach einem der vorstehenden Ansprüche, **dadurch gekennzeichnet, dass** die zur Schweißnaht (5) orientierte Seite (7) der Entlastungssicke (6) gegenüberliegend zu dem Schweißnahtabschnitt (8) angeordnet ist, in welchem bei einer Beaufschlagung des Torsionsprofils (3) mit einem Biegemoment die höchsten Spannungen auftreten, wobei der Schweißnahtabschnitt (8), in welchem bei einer Beaufschlagung des Torsionsprofils (3) mit einem Biegemoment die höchsten Spannungen auftreten, dem Übergangsbereich der Schweißnaht (5) von einem bezogen auf den Längslenker (2) im Wesentlichen vertikalen (V) Verlauf zu einem im Wesentlichen horizontalen (H) Verlauf entspricht.

6. Verbundlenkerachse (1) nach einem der vorstehenden Ansprüche, **dadurch gekennzeichnet, dass** das Torsionsprofil (3) in seinen längsseitigen Endabschnitten (4) im Bereich der Schweißnaht (5) jeweils zwei Entlastungssicken (6) aufweist.
